# EUROPEAN PATENT APPLICATION

(11) **EP 3 403 871 A1**
(43) Date of publication of application: **21.11.2018**
(21) Application number: 18171289.4
(22) Date of filing: 08.05.2018
(51) Int. Cl.: B60L 11/18, H02J 7/00, H02J 7/14

(54) **AUXILIARY POWER SUPPLY APPARATUS AND POWER SUPPLY SYSTEM**

(30) Priority: 15.05.2017 JP 2017096565
(71) Applicant: JTEKT CORPORATION, Osaka-shi, Osaka 542-8502 (JP)
(72) Inventor: SUGIYAMA, Toyoki, Osaka-shi, Osaka 542-8502 (JP); SATO, Fumihiko, Osaka-shi, Osaka 542-8502 (JP)
(74) Representative: Winter, Brandl, Fürniss, Hübner, Röss, Kaiser, Polte - Partnerschaft mbB

(57) **Abstract**

An auxiliary power supply apparatus includes a first switching circuit and a second switching circuit. The first switching circuit is disposed between a charging circuit and positive terminals of a plurality of auxiliary power supplies. The first switching circuit is configured to perform switching between or among the auxiliary power supplies such that at least one of the auxiliary power supplies is connected to the charging circuit, and the other auxiliary power supply or supplies is or are connected to a power supply destination. The second switching circuit is configured to perform switching between a parallel connection state and a series connection state. In the parallel connection state, the auxiliary power supplies are connected in parallel between a main power supply and the first switching circuit. In the series connection state, the auxiliary power supplies are connected in series between the main power supply and the first switching circuit.

## Description

### BACKGROUND OF THE INVENTION

### 1. Field of the Invention

The invention relates to auxiliary power supply apparatuses and power supply systems including the apparatuses.

### 2. Description of the Related Art

Japanese Patent Application Publication No. 2014-150672 (JP 2014-150672 A) discloses an auxiliary power supply apparatus to supply power to a driving circuit for an electric power steering (EPS) motor. The auxiliary power supply apparatus disclosed in JP 2014-150672 A includes a single auxiliary power supply, a charging circuit, and a switching circuit (discharging circuit). The single auxiliary power supply is connected to a main power supply. The charging circuit charges the auxiliary power supply using the main power supply. The switching circuit switches a power supply state between a normal output voltage state and a high output voltage state. In the normal output voltage state, power is supplied to the driving circuit using only the main power supply. In the high output voltage state, power is supplied to the driving circuit using both of the main power supply and the auxiliary power supply through discharge of the auxiliary power supply.

During an EPS high load time, the switching circuit sets the power supply state to the high output voltage state. In this case, the auxiliary power supply enters a discharge state. During an EPS low load time, the switching circuit sets the power supply state to the normal output voltage state. In this case, the charging circuit charges the auxiliary power supply.

The auxiliary power supply apparatus disclosed in JP 2014-150672 A does not simultaneously discharge and charge the same auxiliary power supply. Thus, the auxiliary power supply apparatus encounters a situation where a voltage applied to the driving circuit decreases during charging of the auxiliary power supply. This makes it difficult to continue and maintain the high output voltage state.

### SUMMARY OF THE INVENTION

An object of the invention is to provide an auxiliary power supply apparatus and a power supply system that are able to continue and maintain a high output voltage state and supply power to a power supply destination from an auxiliary power supply in the event of an abnormality in a main power supply.

An aspect of the invention provides an auxiliary power supply apparatus including a plurality of auxiliary power supplies, a charging circuit, a first switching circuit, a second switching circuit, and a grounding/non-grounding selector. The charging circuit is connected to a main power supply. The charging circuit is configured to charge the auxiliary power supplies. The first switching circuit is disposed between the charging circuit and positive terminals of the auxiliary power supplies. The first switching circuit is configured to perform switching between or among the auxiliary power supplies such that at least one of the auxiliary power supplies is connected to the charging circuit, and the other auxiliary power supply or supplies is or are connected to a power supply destination. The second switching circuit is configured to perform switching between a parallel connection state and a series connection state. In the parallel connection state, at least two of the auxiliary power supplies are connected in parallel between the main power supply and the first switching circuit. In the series connection state, at least two of the auxiliary power supplies are connected in series between the main power supply and the first switching circuit. The grounding/non-grounding selector is configured to connect a connection point between the main power supply and a parallel or series circuit of the at least two of the auxiliary power supplies to a ground or disconnect the connection point from the ground.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a diagram illustrating a schematic configuration of an electro-hydraulic power steering system for which an auxiliary power supply apparatus according to the invention is used;
FIG. 2 is a circuit diagram illustrating an example of an electric configuration of the electro-hydraulic power steering system;
FIG. 3 is a circuit diagram illustrating an example of a specific configuration of a first switching circuit;
FIG. 4 is a circuit diagram illustrating an example of a specific configuration of a second switching circuit;
FIG. 5A is a flow chart illustrating steps included in a procedure of a normal control process to be performed by an electronic control unit (ECU) for power supply control;
FIG. 5B is a flow chart illustrating steps included in the procedure of the normal control process to be performed by the ECU for power supply control; and
FIG. 6 is a flow chart illustrating a procedure of a main power supply abnormality monitoring process to be performed by the ECU for power supply control.

### DETAILED DESCRIPTION OF EMBODIMENTS

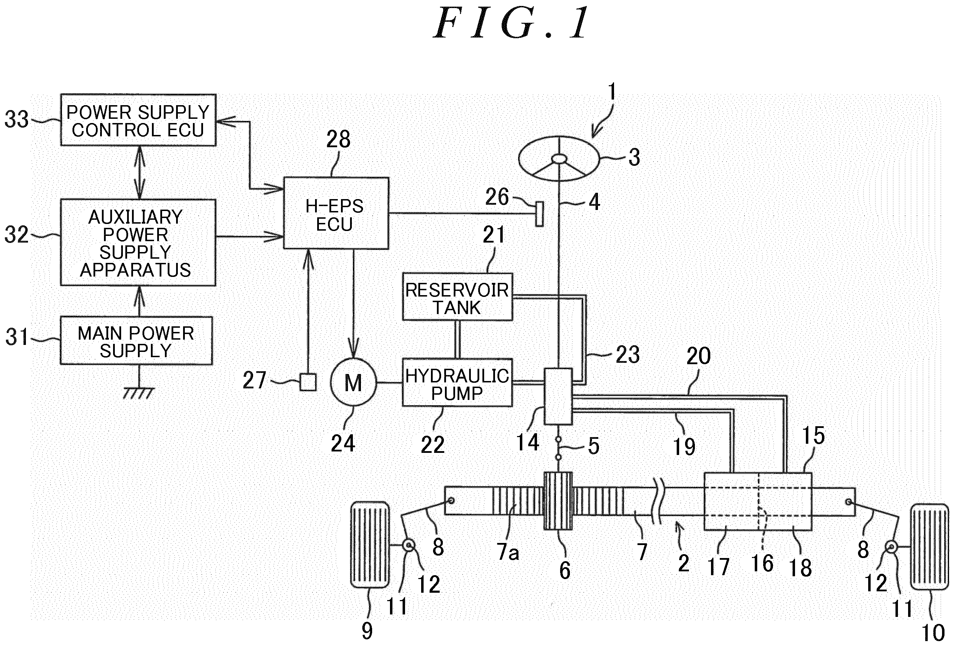

Embodiments of the invention will be described in detail below with reference to the accompanying drawings. FIG. 1 is a diagram illustrating a schematic configuration of an electro-hydraulic power steering (H-EPS) system 1 for which an auxiliary power supply apparatus 32 according to the invention is used. The electro-hydraulic power steering system 1 is provided in connection with a steering mechanism 2 for a vehicle. The electro-hydraulic power steering system 1 serves to provide a steering assisting force to the steering mechanism 2.

The steering mechanism 2 includes a steering wheel 3, a steering shaft 4, a pinion shaft 5, and a rack shaft 7. The steering wheel 3 is a steering member to be operated by a driver so as to steer the vehicle in a desired direction. The steering shaft 4 is coupled to the steering wheel 3. The pinion shaft 5 is coupled to an end of the steering shaft 4 through a hydraulic control valve 14. The pinion shaft 5 includes a pinion gear 6. The rack shaft 7 includes a rack gear portion 7a meshing with the pinion gear 6. The rack shaft 7 is a steerage shaft extending in a right-left direction of the vehicle.

Tie rods 8 are each coupled to an associated one of the ends of the rack shaft 7. The tie rods 8 are each coupled to an associated one of steering knuckle arms 11. One of the steering knuckle arms 11 supports the right steered wheel 10. The other steering knuckle arm 11 supports the left steered wheel 9. Each steering knuckle arm 11 is rotatable around an associated kingpin 12. Operating the steering wheel 3 rotates the steering shaft 4. The pinion gear 6 and the rack gear portion 7a convert the rotation of the steering shaft 4 into a rectilinear motion of the rack shaft 7 in its axial direction. The rectilinear motion is converted into a rotational motion of each steering knuckle arm 11 around the associated kingpin 12. This results in steerage of the right steered wheel 10 and the left steered wheel 9.

The hydraulic control valve 14 is a rotary valve. The hydraulic control valve 14 includes: a sleeve valve body (not illustrated) connected to the steering shaft 4; a shaft valve body (not illustrated) connected to the pinion shaft 5; and a torsion bar (not illustrated) through which the valve bodies are coupled to each other. The torsion bar twists in accordance with the direction and magnitude of a steering torque applied to the steering wheel 3. The degree of opening of the hydraulic control valve 14 changes in accordance with the direction and degree of twisting of the torsion bar.

The hydraulic control valve 14 is connected to a power cylinder 15 to provide the steering assisting force to the steering mechanism 2. The power cylinder 15 includes: a piston 16 integral with the rack shaft 7; and a pair of cylinder chambers 17 and 18 defined by the piston 16. The cylinder chamber 17 is connected to the hydraulic control valve 14 through an oil passage 19. The cylinder chamber 18 is connected to the hydraulic control valve 14 through an oil passage 20.

The electro-hydraulic power steering system 1 includes a reservoir tank 21, a steering assisting force generating hydraulic pump 22, and an oil circulation passage 23 passing through the reservoir tank 21 and the hydraulic pump 22. The hydraulic control valve 14 is disposed at a location somewhere along a portion of the oil circulation passage 23 between the reservoir tank 21 and the hydraulic pump 22. The hydraulic pump 22 is a gear pump, for example. Driving the hydraulic pump 22 by an electric motor 24 draws hydraulic oil stored in the reservoir tank 21 and supplies the hydraulic oil to the hydraulic control valve 14. Excess hydraulic oil is returned to the reservoir tank 21 from the hydraulic control valve 14 through the oil circulation passage 23.

The electric motor 24 is rotated in one direction so as to drive the hydraulic pump 22. Specifically, the electric motor 24 includes an output shaft coupled to an input shaft of the hydraulic pump 22. Rotation of the output shaft of the electric motor 24 rotates the input shaft of the hydraulic pump 22 so as to drive the hydraulic pump 22. Suppose that when the torsion bar is twisted in a first direction, the hydraulic control valve 14 supplies hydraulic oil to the cylinder chamber 17 through the oil passage 19 while returning hydraulic oil to the reservoir tank 21 from the cylinder chamber 18 through the oil passage 20. In this case, when the torsion bar is twisted in a second direction, the hydraulic control valve 14 supplies hydraulic oil to the cylinder chamber 18 through the oil passage 20 while returning hydraulic oil to the reservoir tank 21 from the cylinder chamber 17 through the oil passage 19. Suppose that when the torsion bar is twisted in the first direction, the hydraulic control valve 14 supplies hydraulic oil to the cylinder chamber 18 through the oil passage 20 while returning hydraulic oil to the reservoir tank 21 from the cylinder chamber 17 through the oil passage 19. In this case, when the torsion bar is twisted in the second direction, the hydraulic control valve 14 supplies hydraulic oil to the cylinder chamber 17 through the oil passage 19 while returning hydraulic oil to the reservoir tank 21 from the cylinder chamber 18 through the oil passage 20.

When virtually no twisting occurs in the torsion bar, the hydraulic control valve 14 enters a "state of equilibrium". In this state, the steering wheel 3 is placed at a neutral position, so that the cylinder chambers 17 and 18 of the power cylinder 15 are maintained at equal pressures, causing hydraulic oil to circulate through the oil circulation passage 23. A steering operation causes the valve bodies of the hydraulic control valve 14 to rotate relative to each other. Thus, hydraulic oil is supplied to one of the cylinder chambers 17 and 18 of the power cylinder 15 so as to move the piston 16 in a vehicle width direction (i.e., the right-left direction of the vehicle). This exerts the steering assisting force on the rack shaft 7.

The vehicle is provided with sensors, such as a steering angle sensor 26 and a rotation angle sensor 27. The steering angle sensor 26 detects a steering angle θh of the steering wheel 3 operated by the driver. The rotation angle sensor 27 detects a rotation angle of a rotor of the electric motor 24. An H-EPS electronic control unit (ECU) 28 receives, for example, the steering angle θh detected by the steering angle sensor 26 and an output signal from the rotation angle sensor 27. The H-EPS ECU 28 controls the electric motor 24 in accordance with, for example, the steering angle θh and the output signal received.

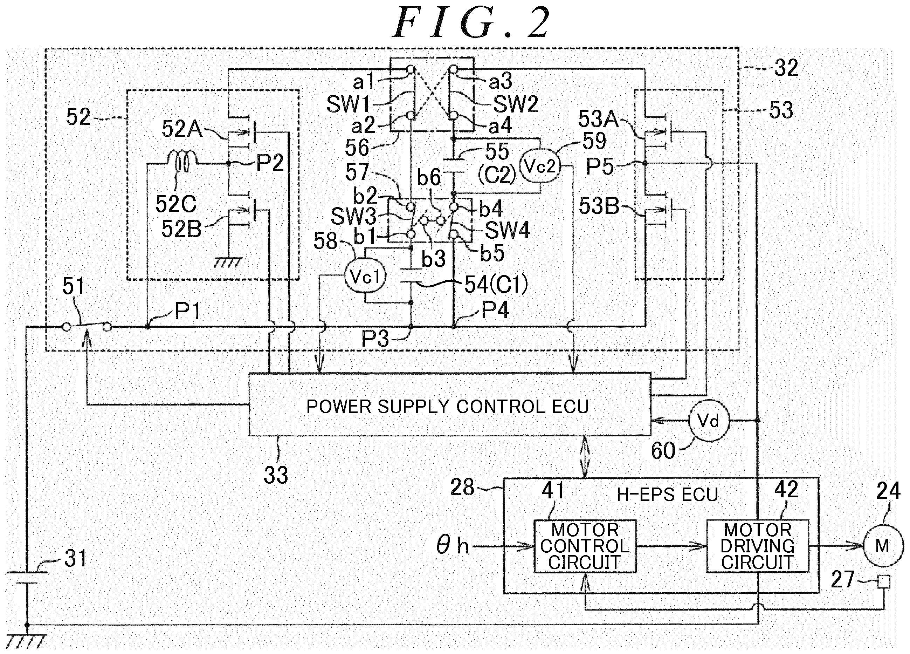

The vehicle is provided with a main power supply 31 and the auxiliary power supply apparatus 32. The auxiliary power supply apparatus 32 is controlled by a power supply control ECU 33. The H-EPS ECU 28 and the power supply control ECU 33 are connected to each other through a communication line. FIG. 2 is a circuit diagram illustrating an example of an electric configuration of the electro-hydraulic power steering system 1.

The H-EPS ECU 28 includes a motor control circuit 41 and a motor driving circuit 42. The motor control circuit 41 is a microcomputer. The motor driving circuit 42 is a power supply destination. The motor driving circuit 42 is controlled by the motor control circuit 41 so as to supply power to the electric motor 24. The motor driving circuit 42 is an inverter circuit. The motor control circuit 41 receives, for example, the steering angle θh detected by the steering angle sensor 26 and the output signal from the rotation angle sensor 27.

The motor control circuit 41 controls the motor driving circuit 42, for example, in a manner described below. The motor control circuit 41 differentiates the steering angle θh, detected by the steering angle sensor 26, with respect to time so as to calculate a steering angular speed. In accordance with the steering angular speed calculated, the motor control circuit 41 sets a target rotation speed that is a target value for a rotation speed of the electric motor 24. In one example, the target rotation speed is set such that the higher the steering angular speed, the higher the target rotation speed.

The motor control circuit 41 calculates a rotation angle of the rotor of the electric motor 24 in accordance with the output signal from the rotation angle sensor 27. The rotation angle of the rotor of the electric motor 24 will hereinafter be referred to as a "rotor rotation angle". The motor control circuit 41 differentiates the rotor rotation angle with respect to time so as to calculate a rotation speed of the electric motor 24. The motor control circuit 41 controls the motor driving circuit 42 such that the rotation speed of the electric motor 24 is equal to the target rotation speed. The auxiliary power supply apparatus 32 is connected in series to the main power supply 31. The auxiliary power supply apparatus 32 includes a relay 51, a charging circuit 52, a discharging circuit 53, a first auxiliary power supply 54, a second auxiliary power supply 55, a first switching circuit 56, a second switching circuit 57, a first voltage sensor 58, a second voltage sensor 59, and a third voltage sensor 60. In the present embodiment, the first auxiliary power supply 54 includes a single capacitor C1, and the second auxiliary power supply 55 includes a single capacitor C2. The capacitors C1 and C2 are substantially equal in capacitance. The capacitor C1 may hereinafter be referred to as a "first capacitor C1", and the capacitor C2 may hereinafter be referred to as a "second capacitor C2".

The first switching circuit 56 includes a first switch SW1 and a second switch SW2. The first switch SW1 connects a first contact point a1 to a second contact point a2 or a fourth contact point a4. The second switch SW2 connects a third contact point a3 to the fourth contact point a4 or the second contact point a2. The second switching circuit 57 includes a third switch SW3 and a fourth switch SW4. The third switch SW3 connects a first contact point b1 to a second contact point b2 or a third contact point b3. The fourth switch SW4 connects a fourth contact point b4 to a fifth contact point b5 or a sixth contact point b6. The third contact point b3 and the sixth contact point b6 are connected to each other.

The relay 51 is disposed between a positive terminal of the main power supply 31 and the charging circuit 52. A connection point P1 is a point of connection between the relay 51 and the charging circuit 52. The charging circuit 52 is a circuit to charge the capacitors C1 and C2. The charging circuit 52 includes a pair of upper and lower switching elements 52A and 52B and a booster coil 52C. The switching elements 52A and 52B are connected in series. A connection point P2 is a point of connection between the switching elements 52A and 52B. The booster coil 52C is connected between the connection point P1 and the connection point P2. Each of the switching elements 52A and 52B is an n-channel metal oxide semiconductor field-effect transistor (MOSFET).

The source of the upper switching element 52A is connected to the drain of the lower switching element 52B. The drain of the upper switching element 52A is connected to the first contact point a1 of the first switching circuit 56. The source of the lower switching element 52B is grounded. The second contact point a2 of the first switching circuit 56 is connected to the second contact point b2 of the second switching circuit 57. The first capacitor C1 is connected between the connection point P1 and the first contact point b1 of the second switching circuit 57. More specifically, a negative terminal of the first capacitor C1 is connected to the connection point P1 through a connection point P3. A positive terminal of the first capacitor C1 is connected to the first contact point b1 of the second switching circuit 57.

The connection point P3 is a point of connection between the connection point P1 and the first capacitor C1. A connection point P4 is a point of connection between the connection point P3 and the fifth contact point b5 of the second switching circuit 57. The connection point P3 is connected to the fifth contact point b5 of the second switching circuit 57 through the connection point P4. The second capacitor C2 is connected between the fourth contact point b4 of the second switching circuit 57 and the fourth contact point a4 of the first switching circuit 56. More specifically, a negative terminal of the second capacitor C2 is connected to the fourth contact point b4 of the second switching circuit 57. A positive terminal of the second capacitor C2 is connected to the fourth contact point a4 of the first switching circuit 56. The connection points P1, P3, and P4 are electrically connected to each other.

The discharging circuit 53 is connected between the connection point P4 and the third contact point a3 of the first switching circuit 56. The discharging circuit 53 includes a pair of upper and lower switching elements 53A and 53B connected in series. Each of the switching elements 53A and 53B is an n-channel MOSFET. The source of the upper switching element 53A is connected to the drain of the lower switching element 53B. The drain of the upper switching element 53A is connected to the third contact point a3 of the first switching circuit 56. The source of the lower switching element 53B is connected to the connection point P4. A connection point P5 is a point of connection between the switching elements 53A and 53B. The connection point P5 is connected to the motor driving circuit 42 in the H-EPS ECU 28.

The first switching circuit 56 performs switching between the first auxiliary power supply 54 (i.e., the capacitor C1) and the second auxiliary power supply 55 (i.e., the capacitor C2) such that one of the first and second auxiliary power supplies 54 and 55 is connected to the charging circuit 52, and the other one of the first and second auxiliary power supplies 54 and 55 is connected to the motor driving circuit 42. Specifically, the first switching circuit 56, including the first switch SW1 and the second switch SW2, switches between a first state indicated by the associated continuous lines in FIG. 2 and a second state indicated by the associated dashed lines in FIG. 2. In the first state, the first switch SW1 connects the first contact point a1 to the second contact point a2, and the second switch SW2 connects the third contact point a3 to the fourth contact point a4. In the second state, the first switch SW1 connects the first contact point a1 to the fourth contact point a4, and the second switch SW2 connects the third contact point a3 to the second contact point a2.

The second switching circuit 57 performs switching between a parallel connection state and a series connection state. In the parallel connection state, the first auxiliary power supply 54 (i.e., the capacitor C1) and the second auxiliary power supply 55 (i.e., the capacitor C2) are connected in parallel between the main power supply 31 (or the connection point P1) and the first switching circuit 56. In the series connection state, the first auxiliary power supply 54 (i.e., the capacitor C1) and the second auxiliary power supply 55 (i.e., the capacitor C2) are connected in series between the main power supply 31 (or the connection point PI) and the first switching circuit 56. Specifically, the second switching circuit 57, including the third switch SW3 and the fourth switch SW4, switches between a third state indicated by the associated continuous lines in FIG. 2 and a fourth state indicated by the associated dashed lines in FIG. 2. In the third state, the third switch SW3 connects the first contact point b1 to the second contact point b2, and the fourth switch SW4 connects the fourth contact point b4 to the fifth contact point b5. Thus, the two capacitors C1 and C2 are connected in parallel between the main power supply 31 (or the connection point P1) and the first switching circuit 56. In the fourth state, the third switch SW3 connects the first contact point b1 to the third contact point b3, and the fourth switch SW4 connects the fourth contact point b4 to the sixth contact point b6. Thus, the two capacitors C1 and C2 are connected in series between the main power supply 31 (or the connection point P1) and the first switching circuit 56.

When the second switching circuit 57 is in the third state and the first switching circuit 56 is in the first state, the switching elements 52A and 52B in the charging circuit 52 are alternately turned on. Then, the output voltage (or battery voltage) of the connection point P1 increases, so that the resulting voltage is applied to the positive terminal of the first capacitor C1. This charges the first capacitor C1. When the second switching circuit 57 is in the third state and the first switching circuit 56 is in the first state, the upper switching element 53A in the discharging circuit 53 is turned on, and the lower switching element 53B in the discharging circuit 53 is turned off. This discharges the second capacitor C2. Accordingly, a sum of the voltage of the main power supply 31 and the capacitor voltage of the second capacitor C2 is applied to the motor driving circuit 42. Thus, when the second switching circuit 57 is in the third state and the first switching circuit 56 is in the first state, the first capacitor C1 is charged while the second capacitor C2 is discharged.

When the second switching circuit 57 is in the third state and the first switching circuit 56 is in the second state, the switching elements 52A and 52B in the charging circuit 52 are alternately turned on. Then, the output voltage (or battery voltage) of the connection point P1 increases, so that the resulting voltage is applied to the positive terminal of the second capacitor C2. This charges the second capacitor C2. When the second switching circuit 57 is in the third state and the first switching circuit 56 is in the second state, the upper switching element 53A in the discharging circuit 53 is turned on, and the lower switching element 53B in the discharging circuit 53 is turned off. This discharges the first capacitor C1. Accordingly, a sum of the voltage of the main power supply 31 and the capacitor voltage of the first capacitor C1 is applied to the motor driving circuit 42. Thus, when the second switching circuit 57 is in the third state and the first switching circuit 56 is in the second state, the second capacitor C2 is charged while the first capacitor C1 is discharged. Consequently, when the second switching circuit 57 is in the third state, the first switching circuit 56 is switched between the first state and the second state alternately so as to maintain the output voltage of the auxiliary power supply apparatus 32 in a high output voltage state where the output voltage of the auxiliary power supply apparatus 32 corresponds to the sum of the output voltage of the main power supply 31 and the capacitor voltage of one of the capacitors C1 and C2.

When the second switching circuit 57 is in the fourth state and the first switching circuit 56 is in the first state, the first capacitor C1 (i.e., the first auxiliary power supply 54) and the second capacitor C2 (i.e., the second auxiliary power supply 55) are connected in series between the main power supply 31 (or the connection point PI) and the discharging circuit 53. In this state, turning off the upper switching element 52A in the charging circuit 52 and turning on the lower switching element 52B in the charging circuit 52 grounds the connection point P1 through the booster coil 52C and the switching element 52B. In this state, turning on the upper switching element 53A in the discharging circuit 53 and turning off the lower switching element 53B in the discharging circuit 53 connects the first capacitor C1 (i.e., the first auxiliary power supply 54) and the second capacitor C2 (i.e., the second auxiliary power supply 55) in series between the ground and the motor driving circuit (power supply destination) 42. Thus, charges accumulated in the first capacitor C1 and the second capacitor C2 are discharged to the motor driving circuit 42 through a series circuit of the first capacitor C1 and the second capacitor C2.

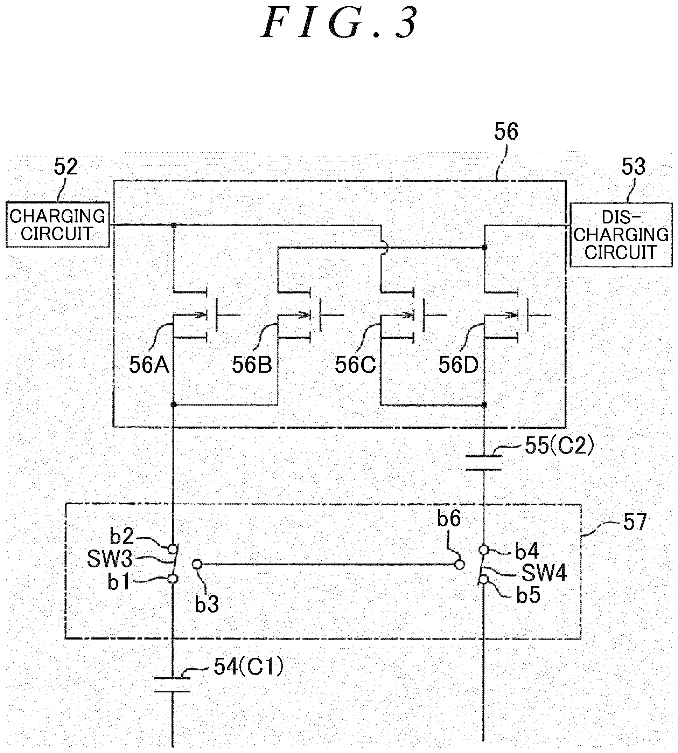

FIG. 3 is a circuit diagram illustrating an example of a specific configuration of the first switching circuit 56. The first switching circuit 56 includes four switching elements, i.e., a first switching element 56A, a second switching element 56B, a third switching element 56C, and a fourth switching element 56D. Each of the first to fourth switching elements 56A to 56D is an n-channel MOSFET. The first switching element 56A is connected between the drain of the upper switching element 52A in the charging circuit 52 and the second contact point b2 of the second switching circuit 57. The second switching element 56B is connected between the drain of the upper switching element 53A in the discharging circuit 53 and the second contact point b2 of the second switching circuit 57.

The third switching element 56C is connected between the drain of the upper switching element 52A in the charging circuit 52 and the positive terminal of the second capacitor C2. The fourth switching element 56D is connected between the drain of the upper switching element 53A in the discharging circuit 53 and the positive terminal of the second capacitor C2. When the first switching circuit 56 is in the first state, the first switching element 56A and the fourth switching element 56D are turned on, and the second switching element 56B and the third switching element 56C are turned off. When the first switching circuit 56 is in the second state, the second switching element 56B and the third switching element 56C are turned on, and the first switching element 56A and the fourth switching element 56D are turned off.

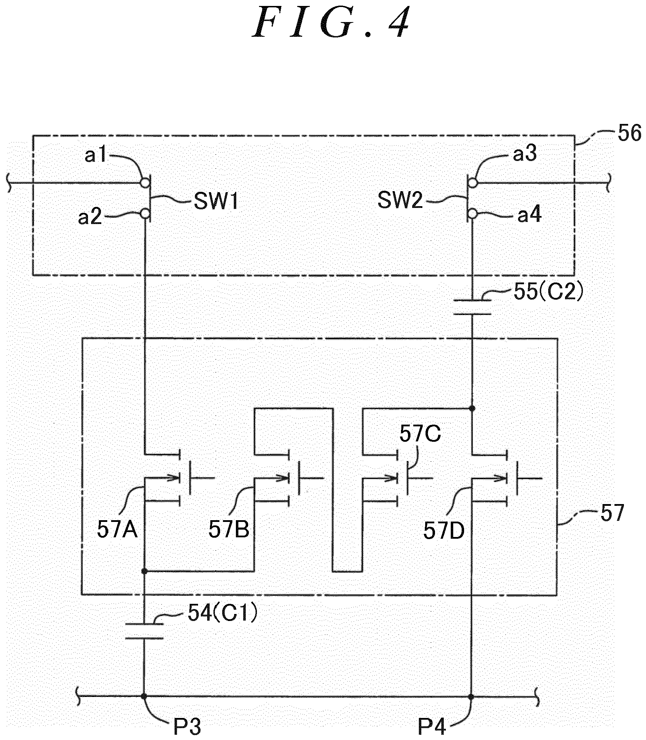

FIG. 4 is a circuit diagram illustrating an example of a specific configuration of the second switching circuit 57. The second switching circuit 57 includes four switching elements, i.e., a first switching element 57A, a second switching element 57B, a third switching element 57C, and a fourth switching element 57D. Each of the first to fourth switching elements 57A to 57D is an n-channel MOSFET. The first switching element 57A is connected between the second contact point a2 of the first switching circuit 56 and the positive terminal of the first capacitor C1. The fourth switching element 57D is connected between the negative terminal of the second capacitor C2 and the connection point P4. The second switching element 57B and the third switching element 57C are connected in series between the positive terminal of the first capacitor C1 and the negative terminal of the second capacitor C2.

When the second switching circuit 57 is in the third state, the first switching element 57A and the fourth switching element 57D are turned on, and the second switching element 57B and the third switching element 57C are turned off. When the second switching circuit 57 is in the fourth state, the second switching element 57B and the third switching element 57C are turned on, and the first switching element 57A and the fourth switching element 57D are turned off.

Referring again to FIG. 2, the first voltage sensor 58 detects an inter-terminal voltage of the first capacitor C1. The inter-terminal voltage of the first capacitor C1 will hereinafter be referred to as a "first capacitor voltage Vc1". The second voltage sensor 59 detects an inter-terminal voltage of the second capacitor C2. The inter-terminal voltage of the second capacitor C2 will hereinafter be referred to as a "second capacitor voltage Vc2". The third voltage sensor 60 detects an input voltage Vd of the motor driving circuit 42. The power supply control ECU 33 receives values detected by the sensors 58, 59, and 60. The power supply control ECU 33 also receives an ignition state detection signal (not illustrated) indicative of the state of an ignition key.

The power supply control ECU 33 is a microcomputer. The microcomputer includes a central processing unit (CPU) and memories (such as a ROM, a RAM, and a non-volatile memory) storing, for example, programs to be executed by the CPU. The power supply control ECU 33 effects on-off control of the relay 51 in accordance with an ignition state detection signal. Turning on the ignition key provides an ignition state detection signal indicative of this operation (hereinafter referred to as an "ignition on state signal") to the power supply control ECU 33. Upon receiving the ignition on state signal, the power supply control ECU 33 turns on the relay 51. Turning off the ignition key provides an ignition state detection signal indicative of this operation (hereinafter referred to as an "ignition off state signal") to the power supply control ECU 33. Upon receiving the ignition off state signal, the power supply control ECU 33 turns off the relay 51. In the present embodiment, turning off the relay 51 turns off all of the switching elements in the auxiliary power supply apparatus 32.

In accordance with the values detected by the voltage sensors 58, 59, and 60, the power supply control ECU 33 controls the switches SW1 and SW2 (i.e., the switching elements 56A to 56D) in the first switching circuit 56, the switches SW3 and SW4 (i.e., the switching elements 57A to 57D) in the second switching circuit 57, the switching elements 52A and 52B in the charging circuit 52, and the switching elements 53A and 53B in the discharging circuit 53.

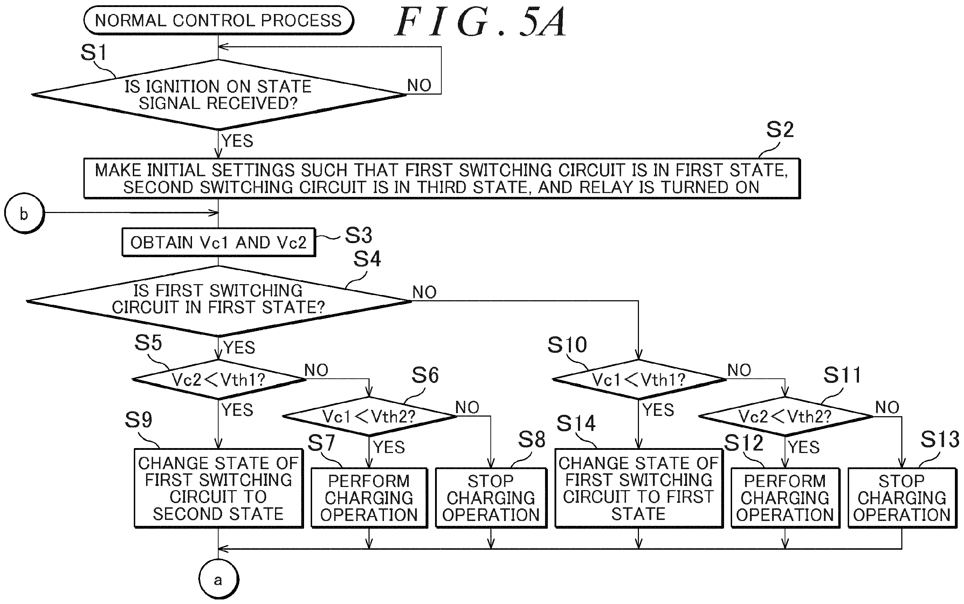

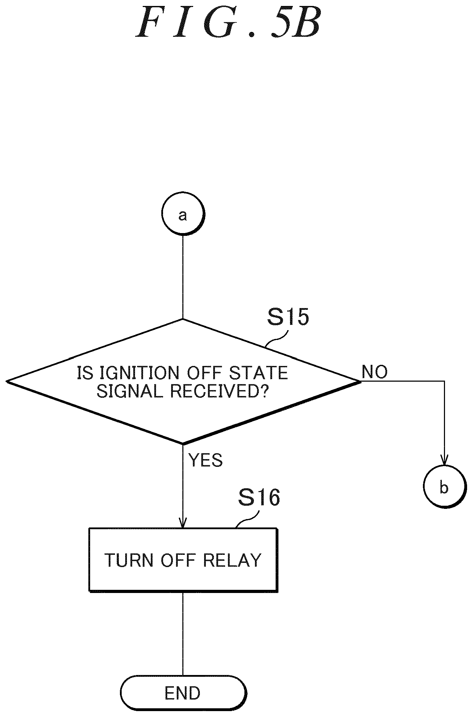

The power supply control ECU 33 performs not only a normal control process but also a main power supply abnormality monitoring process. FIGS. 5A and 5B are flow charts illustrating a procedure of the normal control process to be performed by the power supply control ECU 33. The power supply control ECU 33 determines in step S1 whether an ignition on state signal is received. When the answer is YES in step S1, the power supply control ECU 33 makes initial settings in step S2. The power supply control ECU 33 makes the initial settings such that the first switching circuit 56 is in the first state and the second switching circuit 57 is in the third state. The power supply control ECU 33 makes the initial settings such that the upper switching element 53A of the discharging circuit 53 is turned on and the lower switching element 53B of the discharging circuit 53 is turned off. The power supply control ECU 33 makes the initial settings such that the relay 51 is turned on. Thus, the second capacitor C2 enters a discharged state.

In step S3, the power supply control ECU 33 obtains the first capacitor voltage Vc1 detected by the first voltage sensor 58 and the second capacitor voltage Vc2 detected by the second voltage sensor 59. The power supply control ECU 33 determines in step S4 whether the first switching circuit 56 is in the first state. Upon determining that the first switching circuit 56 is in the first state (i.e., when the answer is YES in step S4), the power supply control ECU 33 moves the procedure to step S5. The power supply control ECU 33 determines in step S5 whether the second capacitor voltage Vc2 is smaller than a predetermined first threshold value Vth1 in order to determine whether the discharged state of the second capacitor C2 is maintainable. The first threshold value Vth1 is equal to or slightly larger than a minimum voltage necessary for each of the capacitors C1 and C2 to maintain the discharged state.

Upon determining that the second capacitor voltage Vc2 is equal to or greater than the first threshold value Vth1 (i.e., when the answer is NO in step S5), the power supply control ECU 33 determines in step S6 whether the first capacitor voltage Vc1 is smaller than a predetermined second threshold value Vth2 (where Vth2 > Vth1). This determination is made in order to prevent overcharging of the first capacitor C1. In the present embodiment, the second threshold value Vth2 is equal to or slightly smaller than an upper limit voltage of each of the capacitors C1 and C2.

Upon determining that the first capacitor voltage Vc1 is smaller than the second threshold value Vth2 (i.e., when the answer is YES in step S6), the power supply control ECU 33 performs a charging operation in step S7. Specifically, the power supply control ECU 33 alternately turns on the switching elements 52A and 52B in the charging circuit 52. This charges the first capacitor C1. Suppose that when the procedure moves from step S6 to step S7, a charging operation is being performed. In this case, the power supply control ECU 33 continues the charging operation. The power supply control ECU 33 then determines in step S15 whether an ignition off state signal is received. Upon determining that no ignition off state signal is received (i.e., when the answer is NO in step S15), the power supply control ECU 33 returns the procedure to step S3.

Upon determining in step S6 that the first capacitor voltage Vc1 is equal to or greater than the second threshold value Vth2 (i.e., when the answer is NO in step S6), the power supply control ECU 33 stops a charging operation in step S8 in order to prevent overcharging of the first capacitor C1. Specifically, the power supply control ECU 33 turns off the switching elements 52A and 52B in the charging circuit 52. Suppose that when the procedure moves from step S6 to step S8, no charging operation is being performed. In this case, the power supply control ECU 33 maintains this state. The power supply control ECU 33 then determines in step S15 whether an ignition off state signal is received. Upon determining that no ignition off state signal is received (i.e., when the answer is NO in step S15), the power supply control ECU 33 returns the procedure to step S3.

Upon determining in step S5 that the second capacitor voltage Vc2 is smaller than the first threshold value Vth1 (i.e., when the answer is YES in step S5), the power supply control ECU 33 changes the state of the first switching circuit 56 to the second state in step S9. The power supply control ECU 33 then determines in step S15 whether an ignition off state signal is received. Upon determining that no ignition off state signal is received (i.e., when the answer is NO in step S15), the power supply control ECU 33 returns the procedure to step S3.

Upon determining in step S4 that the first switching circuit 56 is in the second state (i.e., when the answer is NO in step S4), the power supply control ECU 33 moves the procedure to step S10. The power supply control ECU 33 determines in step S10 whether the first capacitor voltage Vc1 is smaller than the first threshold value Vth1 in order to determine whether the discharged state of the first capacitor C1 is maintainable.

Upon determining that the first capacitor voltage Vc1 is equal to or greater than the first threshold value Vth1 (i.e., when the answer is NO in step S10), the power supply control ECU 33 determines in step S11 whether the second capacitor voltage Vc2 is smaller than the second threshold value Vth2. Upon determining that the second capacitor voltage Vc2 is smaller than the second threshold value Vth2 (i.e., when the answer is YES in step S11), the power supply control ECU 33 performs a charging operation in step S12. Specifically, the power supply control ECU 33 alternately turns on the switching elements 52A and 52B in the charging circuit 52. This charges the second capacitor C2. Suppose that when the procedure moves from step S11 to step S12, a charging operation is being performed. In this case, the power supply control ECU 33 continues the charging operation. The power supply control ECU 33 then determines in step S15 whether an ignition off state signal is received. Upon determining that no ignition off state signal is received (i.e., when the answer is NO in step S15), the power supply control ECU 33 returns the procedure to step S3.

Upon determining in step S11 that the second capacitor voltage Vc2 is equal to or greater than the second threshold value Vth2 (i.e., when the answer is NO in step S11), the power supply control ECU 33 stops a charging operation in step S13 in order to prevent overcharging of the second capacitor C2. Specifically, the power supply control ECU 33 turns off the switching elements 52A and 52B in the charging circuit 52. Suppose that when the procedure moves from step S11 to step S13, no charging operation is being performed. In this case, the power supply control ECU 33 maintains this state. The power supply control ECU 33 then determines in step S15 whether an ignition off state signal is received. Upon determining that no ignition off state signal is received (i.e., when the answer is NO in step S15), the power supply control ECU 33 returns the procedure to step S3.

Upon determining in step S10 that the first capacitor voltage Vc1 is smaller than the first threshold value Vth1 (i.e., when the answer is YES in step S10), the power supply control ECU 33 changes the state of the first switching circuit 56 to the first state in step S14. The power supply control ECU 33 then determines in step S15 whether an ignition off state signal is received. Upon determining that no ignition off state signal is received (i.e., when the answer is NO in step S15), the power supply control ECU 33 returns the procedure to step S3.

Upon determining in step S15 that an ignition off state signal is received (i.e., when the answer is YES in step S15), the power supply control ECU 33 turns off the relay 51 in step S16. The normal control process involves switching the state of the first switching circuit 56 between the first state (where the second capacitor C2 is dischargeable and the first capacitor C1 is chargeable) and the second state (where the first capacitor C1 is dischargeable and the second capacitor C2 is chargeable) alternately. This enables the auxiliary power supply apparatus 32 to be maintained in the high output voltage state. Thus, a sum of the voltage of the main power supply 31 and the voltage of the first capacitor C1 or the second capacitor C2 is supplied to the motor driving circuit 42 of the H-EPS ECU 28. In other words, a high voltage is supplied to the motor driving circuit 42 of the H-EPS ECU 28. This reduces the current flowing out from the main power supply 31.

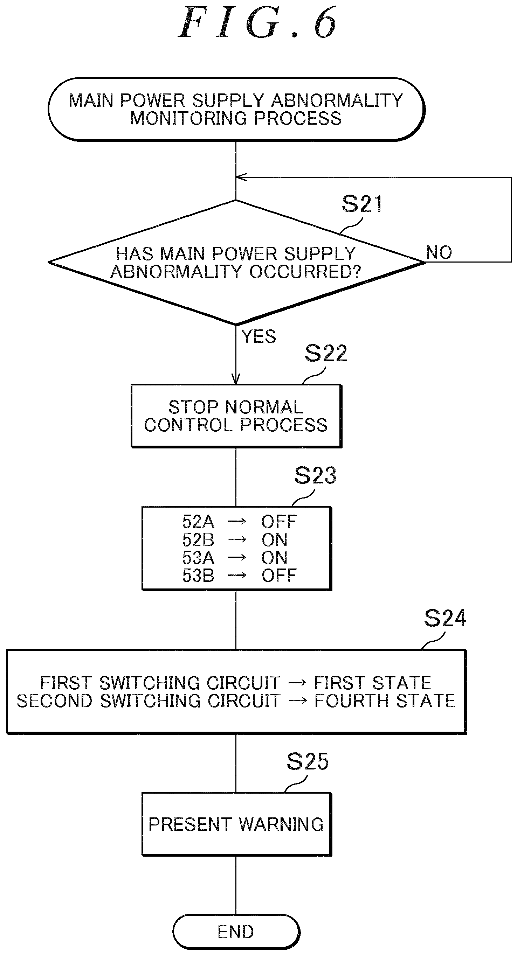

FIG. 6 is a flow chart illustrating a procedure of the main power supply abnormality monitoring process to be performed by the power supply control ECU 33. Upon receiving an ignition state signal, the power supply control ECU 33 starts the main power supply abnormality monitoring process. In the main power supply abnormality monitoring process, the power supply control ECU 33 determines in step S21 whether a main power supply abnormality has occurred. As used herein, the term "main power supply abnormality" refers to a state where a suitable voltage is not applied to the motor driving circuit 42 from the main power supply 31 owing to, for example, a failure in the main power supply 31 or a failure in the relay 51. In the present embodiment, the power supply control ECU 33 determines whether the input voltage Vd of the motor driving circuit 42, detected by the third voltage sensor 60, is smaller than a predetermined abnormality determination threshold value Vth3 so as to determine whether a main power supply abnormality has occurred.

Specifically, when the input voltage Vd of the motor driving circuit 42 is equal to or greater than the predetermined abnormality determination threshold value Vth3, the power supply control ECU 33 determines that no main power supply abnormality has occurred. When the input voltage Vd of the motor driving circuit 42 is smaller than the predetermined abnormality determination threshold value Vth3, the power supply control ECU 33 determines that a main power supply abnormality has occurred. Upon determining that no main power supply abnormality has occurred (i.e., when the answer is NO in step S21), the power supply control ECU 33 returns the procedure to step S21.

Upon determining in step S21 that a main power supply abnormality has occurred (i.e., when the answer is YES in step S21), the power supply control ECU 33 stops the normal control process in step S22. The power supply control ECU 33 then performs a power supply backup operation in steps S23 and S24. Specifically, in step S23, the power supply control ECU 33 first turns off the upper switching element 52A in the charging circuit 52, turns on the lower switching element 52B in the charging circuit 52, turns on the upper switching element 53A in the discharging circuit 53, and turns off the lower switching element 53B in the discharging circuit 53.

Then, the power supply control ECU 33 puts the first switching circuit 56 in the first state and puts the second switching circuit 57 in the fourth state in step S24. Thus, the first capacitor C1 and the second capacitor C2 are connected in series between the ground and the motor driving circuit 42. This causes charges accumulated in the first capacitor C1 and the second capacitor C2 to be discharged to the motor driving circuit 42. Consequently, if a main power supply abnormality has occurred, the H-EPS ECU 28 would be able to continue assisting control without a large reduction in assisting force.

In order to notify the driver of occurrence of a main power supply abnormality, the power supply control ECU 33 presents a warning on a display (not illustrated) in step S25. In one example, the voltage of the main power supply 31 is set at 12 V, the capacitor voltage of the first capacitor C1 at the start of discharge is set at 6 V, and the capacitor voltage of the second capacitor C2 at the start of discharge is set at 6 V. When no main power supply abnormality has occurred, the capacitor voltage of the first capacitor C1 or the second capacitor C2 (which is 6 V) is added to the voltage of the main power supply 31 (which is 12 V), so that a voltage of 18 V is applied to the motor driving circuit 42. When a main power supply abnormality has occurred, the capacitor voltage of the second capacitor C2 (which is 6 V) is added to the capacitor voltage of the first capacitor C1 (which is 6 V), so that a voltage of 12 V is applied to the motor driving circuit 42.

Although the embodiment of the invention has been described thus far, the invention may be embodied in other forms. For example, in the foregoing embodiment, the first capacitor C1 and the second capacitor C2 are substantially equal in capacitance. Alternatively, the first capacitor C1 and the second capacitor C2 may be different in capacitance. In such a case, the second threshold value Vth2 for the first capacitor C1 and the second threshold value Vth2 for the second capacitor C2 are different from each other in accordance with the capacitances of the capacitors C1 and C2.

In the foregoing embodiment, two auxiliary power supplies are provided. Alternatively, three or more auxiliary power supplies may be provided. When three or more auxiliary power supplies are provided, the first switching circuit 56 performs switching among the three or more auxiliary power supplies such that at least one of the auxiliary power supplies is connected to the charging circuit 52, and the other auxiliary power supply or supplies is or are connected to the motor driving circuit 42. When three or more auxiliary power supplies are provided, the second switching circuit 57 performs switching between the parallel connection state and the series connection state. In the parallel connection state, the auxiliary power supplies are connected in parallel between the first switching circuit 56 and the main power supply 31 (or the connection point PI). In the series connection state, the auxiliary power supplies are connected in series between the first switching circuit 56 and the main power supply 31 (or the connection point P1).

In the foregoing embodiment, each auxiliary power supply includes a single capacitor. Alternatively, each auxiliary power supply may include a plurality of capacitors. Each auxiliary power supply may include a power supply element other than one or a plurality of capacitors. Examples of power supply elements other than capacitors include an all-solid-state battery and a lithium ion battery. In the foregoing embodiment, the power supply control ECU 33 determines whether the input voltage Vd of the motor driving circuit 42 is smaller than the predetermined abnormality determination threshold value Vth3 so as to determine whether a main power supply abnormality has occurred. Alternatively, the power supply control ECU 33 may determine whether the inter-terminal voltage of the main power supply 31 is smaller than a predetermined value so as to determine whether a main power supply abnormality has occurred.

In the foregoing embodiment, the motor control circuit 41 sets, in accordance with the steering angular speed, the target rotation speed that is a target value for the rotation speed of the electric motor 24. Alternatively, the target rotation speed may be a fixed value set in advance. The foregoing embodiment has been described on the assumption that the auxiliary power supply apparatus according to the invention is used for an electro-hydraulic power steering (H-EPS) system. Alternatively, the auxiliary power supply apparatus according to the invention may also be used for an electric power steering (EPS) system. In other words, the auxiliary power supply apparatus according to the invention may be used as an auxiliary power supply apparatus for a circuit to drive an electric motor of an electric power steering system.

The invention is also applicable to a system other than an electric power steering system when the system requires power supply backup. Various design changes may be made to the invention within the scope of the claims.

## Claims

1. An auxiliary power supply apparatus comprising:
a plurality of auxiliary power supplies;
a charging circuit connected to a main power supply, the charging circuit being configured to charge the auxiliary power supplies;
a first switching circuit disposed between the charging circuit and positive terminals of the auxiliary power supplies, the first switching circuit being configured to perform switching between or among the auxiliary power supplies such that at least one of the auxiliary power supplies is connected to the charging circuit, and the other auxiliary power supply or supplies is or are connected to a power supply destination;
a second switching circuit configured to perform switching between a parallel connection state and a series connection state, the parallel connection state being a state where at least two of the auxiliary power supplies are connected in parallel between the main power supply and the first switching circuit, the series connection state being a state where at least two of the auxiliary power supplies are connected in series between the main power supply and the first switching circuit; and
a grounding/non-grounding selector configured to connect a connection point between the main power supply and a parallel or series circuit of the at least two of the auxiliary power supplies to a ground or disconnect the connection point from the ground.

2. The auxiliary power supply apparatus according to claim 1, wherein
the plurality of auxiliary power supplies include a first auxiliary power supply and a second auxiliary power supply,
the first switching circuit is configured to perform switching between a first state and a second state, the first state being a state where the first auxiliary power supply is connected to the charging circuit and the second auxiliary power supply is connected to the power supply destination, the second state being a state where the first auxiliary power supply is connected to the power supply destination and the second auxiliary power supply is connected to the charging circuit, and
the second switching circuit is configured to perform switching between a parallel connection state and a series connection state, the parallel connection state being a state where the first auxiliary power supply and the second auxiliary power supply are connected in parallel between the main power supply and the first switching circuit, the series connection state being a state where the first auxiliary power supply and the second auxiliary power supply are connected in series between the main power supply and the first switching circuit.

3. A power supply system comprising:
the auxiliary power supply apparatus according to claim 2; and
an auxiliary power supply apparatus controller to control the auxiliary power supply apparatus, wherein
the auxiliary power supply apparatus controller includes
a normal control processor configured to perform a normal control process, and
a power supply backup processor to perform a power supply backup process when an abnormality has occurred in the main power supply, and
the power supply backup processor includes
a second switching circuit controller configured to control the second switching circuit such that the first auxiliary power supply and the second auxiliary power supply are connected in series between the main power supply and the first switching circuit,
a grounding/non-grounding selector controller configured to control the grounding/non-grounding selector such that a connection point between the main power supply and a series circuit of the first and second auxiliary power supplies is connected to a ground, and
a first switching circuit controller to control the first switching circuit such that the series circuit of the first and second auxiliary power supplies is connected to the power supply destination through the first switching circuit.

4. The power supply system according to claim 3, further comprising:
a first voltage detector configured to detect a first voltage that is an inter-terminal voltage of the first auxiliary power supply; and
a second voltage detector configured to detect a second voltage that is an inter-terminal voltage of the second auxiliary power supply, wherein
the normal control processor includes
a second switching circuit controller configured to control the second switching circuit such that the first auxiliary power supply and the second auxiliary power supply are connected in parallel between the main power supply and the first switching circuit,
a first switching controller configured to, where the first switching circuit is in the first state, switch the first switching circuit to the second state when the second voltage detected by the second voltage detector is smaller than a predetermined first threshold value, and
a second switching controller configured to, where the first switching circuit is in the second state, switch the first switching circuit to the first state when the first voltage detected by the first voltage detector is smaller than the first threshold value.

5. The power supply system according to claim 4, wherein
the normal control processor further includes
a first charging circuit controller configured to, where the first switching circuit is in the first state, control the charging circuit such that the first auxiliary power supply is charged only when the first voltage detected by the first voltage detector is smaller than a predetermined second threshold value, and
a second charging circuit controller configured to, where the first switching circuit is in the second state, control the charging circuit such that the second auxiliary power supply is charged only when the second voltage detected by the second voltage detector is smaller than the second threshold value.
